# EUROPEAN PATENT APPLICATION

(11) **EP 1 857 743 A1**
(43) Date of publication of application: **21.11.2007**
(21) Application number: 07108302.6
(22) Date of filing: 16.05.2007
(51) Int. Cl.: F24D 3/16, E04B 9/26

(54) **Radiant panels and method for providing radiant panels**

(30) Priority: 17.05.2006 IT TV20060079
(71) Applicant: OFFICINE TERMOTECNICHE FRACCARO O.T.F. S.r.l., 31033 Castelfranco Veneto (Treviso) (IT)
(72) Inventor: Fraccaro, Gimmi, 31033 Castelfranco Veneto TV (IT)
(74) Representative: Modiano, Micaela Nadia

(57) **Abstract**

A method for providing radiating panels (1), which comprises a step for shaping two or more pre-coated metal plates (2) of the same length, so as to obtain thereon a plurality of longitudinal grooves (3) which are approximately mutually parallel, and obtaining, at at least one longitudinal end thereof, a lip (20) which is approximately perpendicular to their plane of arrangement. The method then entails placing in each groove (3) a metal pipe (11), which protrudes with its ends longitudinally from the respective metal plate. The metal plates (2) are then arranged side by side in pairs so as to match up the lips (20) of each pair of mutually side-by-side plates (2), and then at least two pre-coated or electrogalvanized or galvanized cross-members (12) are arranged above the pipes (11); the cross-members (12) are fixed to the metal plates (2) by clinching.

## Description

The present invention relates to a method for providing radiating panels.

Currently, it is known to use radiating panels for heating, particularly for heating large enclosed spaces such as for example industrial buildings or supermarkets.

These panels are produced by shaping, for example by way of appropriately provided pressing and folding or forming machines, blackplates which are approximately rectangular and are made of non-coated steel.

This process allows to obtain on such plates a plurality of approximately mutually parallel longitudinal grooves, in which a corresponding number of steel pipes is then arranged, said pipes protruding, with their ends, longitudinally with respect to said plate.

Cross-members, also made of steel, are arranged above and at right angles to the pipes; the pipes and cross-members are then fixed to the metal plate by spot welds.

The panel is then subjected sequentially to suitable washing and drying and coating with appropriate coatings which are adapted to increase its radiation coefficient and finally to a drying process.

The installation of these known types of panel provides for their connection to a suitable hydraulic system which is capable of making a heat transfer fluid, such as for example water, steam or a diathermic oil, at a chosen temperature, flow within the pipes of said panels.

The heat transfer fluid heats the pipes, which in turn transmit the heat to the metal plate, which thus begins to exchange heat with the environment by radiation.

However, these known types of radiating panel have a drawback: the method for their production is in fact very expensive, particularly as regards the steps for washing, drying and coating; performing them in fact requires plants which have large dimensions and accordingly high costs.

These costs are also increased because some of these processes are performed outside the panel production plant at companies which specialize in such processes.

Moreover, such known types of panel typically have very large dimensions, which can be comprised between 2 and 12 meters, and therefore transporting them to be washed and/or coated is expensive and further affects overall production costs.

Moreover, there are problems linked to environmental protection, due to the processes for washing-degreasing the metal plates.

The aim of the present invention is to solve the above mentioned problems, eliminating the drawbacks of the cited background art, by providing a method which allows to reduce times and processes for obtaining a radiating panel.

Within this aim, an object of the invention is to provide a method which allows to provide a radiating panel which does not need to be washed and/or coated after its assembly.

Another object is to provide a method which allows to obtain radiating panels with low costs.

Another object is to obtain a method which allows to limit the handling of the panel and allows to provide it in small industrial facilities.

This aim and these and other objects, which will become better apparent hereinafter, are achieved by a method for providing radiating panels, characterized in that it comprises the steps of:
a) shaping two or more pre-coated metal plates of the same length, so as to obtain thereon a plurality of longitudinal grooves which are approximately mutually parallel, and obtaining, at at least one longitudinal end thereof, a lip which is approximately perpendicular to their plane of arrangement;
b) placing a metal pipe in each of said grooves, said pipes protruding with their ends longitudinally from said two or more plates;
c) arranging side by side in pairs said two or more metal plates, so as to match up the lips of each pair of said two or more mutually side-by-side plates;
d) positioning, above said pipes, at least two pre-coated or electrogalvanized or galvanized cross-members and fixing said at least two cross-members to said two or more metal plates by clinching.

Further characteristics and advantages of the invention will become better apparent from the following detailed description of a particular but not exclusive embodiment thereof, illustrated by way of non-limiting example in the accompanying drawings, wherein:
Figure 1 is an exploded perspective view of a radiating panel provided with the method according to the invention;
Figure 2 is a perspective view of the panel of Figure 1 before application of clinching points;
Figure 3 is an exploded front view of the panel of Figure 1;
Figure 4 is a front view of the panel of Figure 3 before the application of the clinching points;
Figure 5 is a plan view of a radiating panel provided with the method according to the invention;
Figure 6 is a perspective view of a detail of a clinching point;
Figure 7 is a diametrical sectional view of the clinching point of Figure 6;
Figure 8 is an exploded perspective view of another form of radiating panel provided with the method according to the invention;
Figure 9 is a perspective view of the panel of Figure 8 prior to the application of the clinching points;
Figure 10 is an exploded front view of the panel of Figure 8;
Figure 11 is a front view of the panel of Figure 10 prior to the application of the clinching points.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

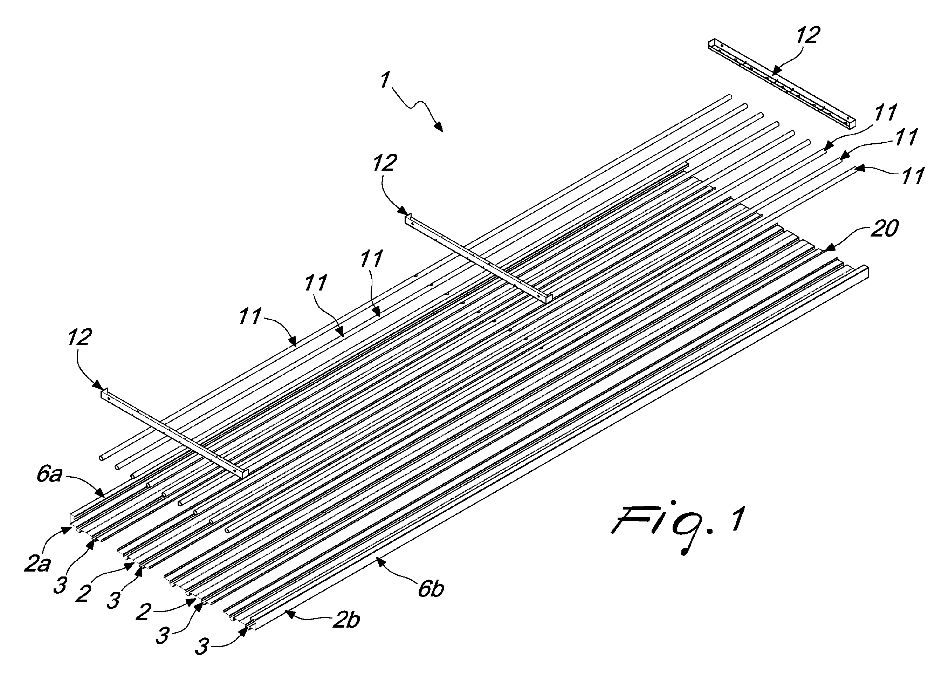

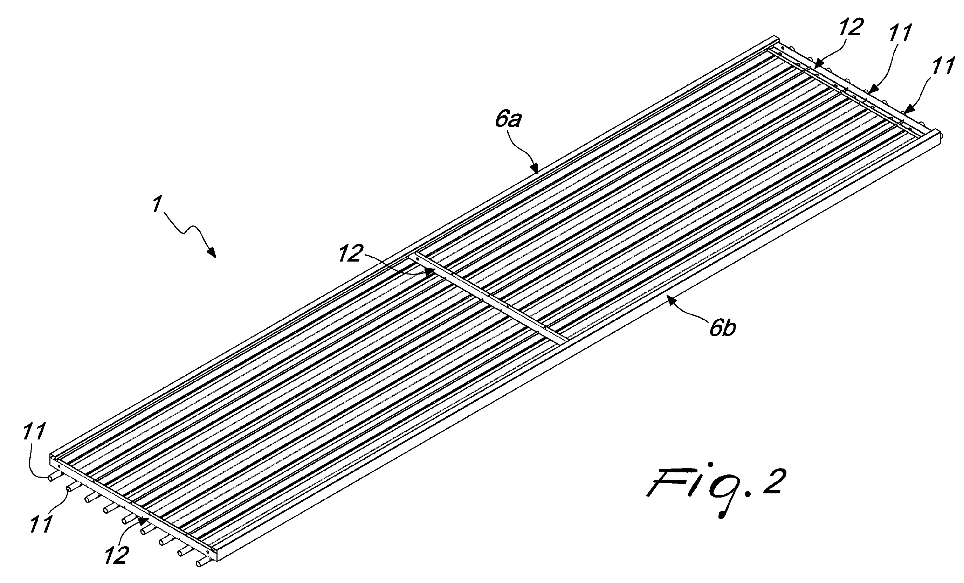

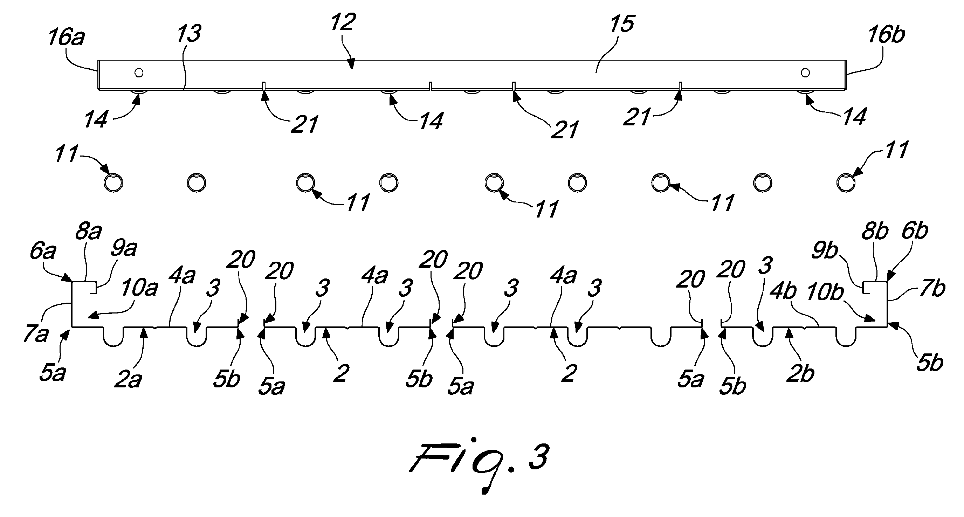

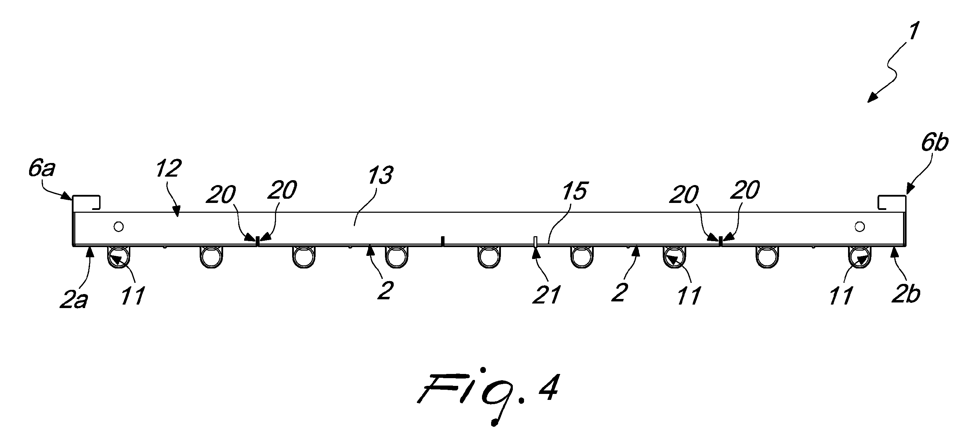

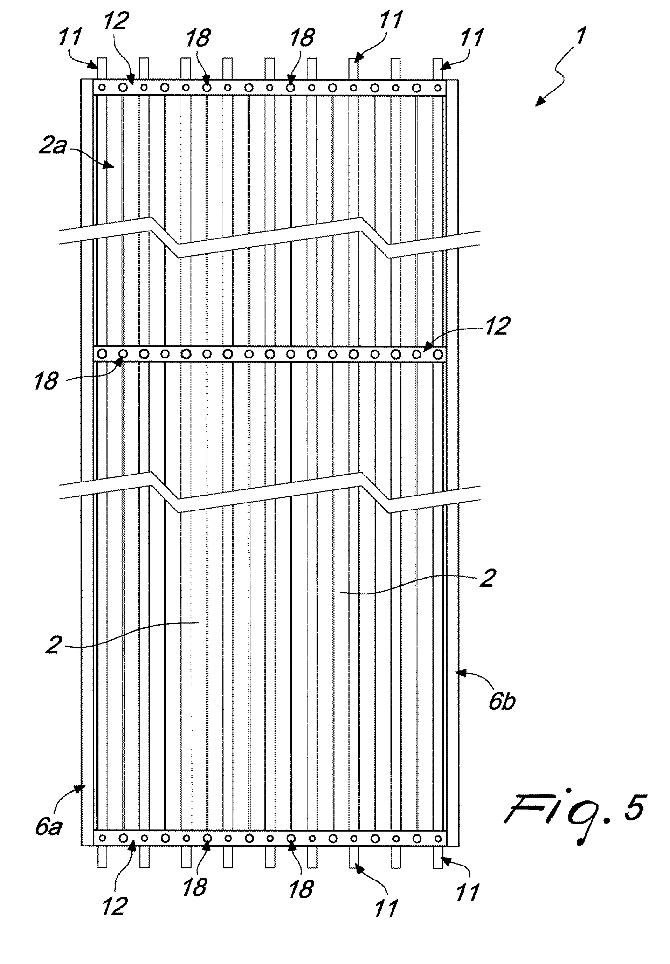

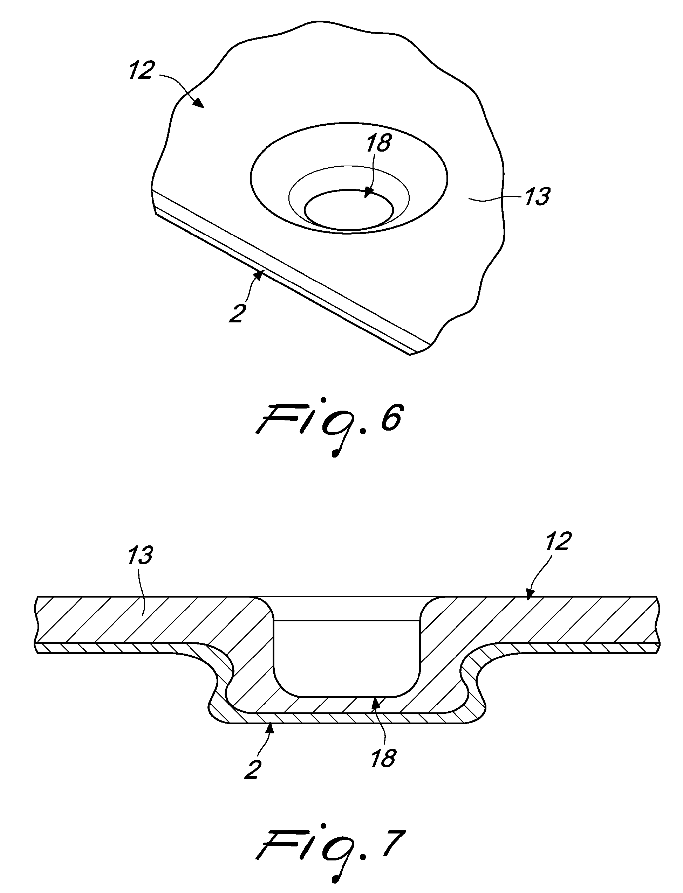

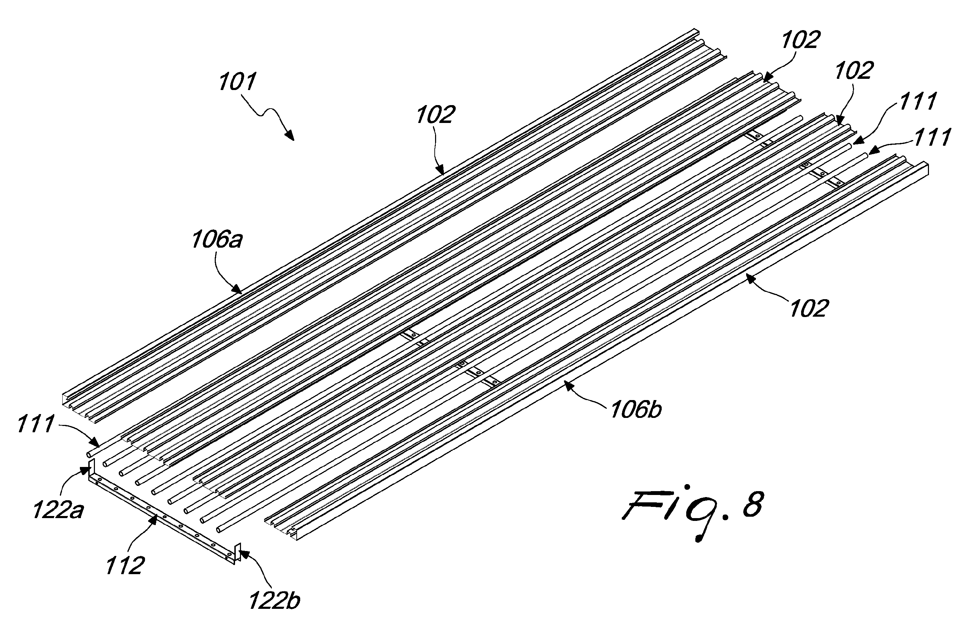

With reference to Figures 1 to 7, the method according to the invention for obtaining radiating panels 1 first of all entails shaping, for example by means of an appropriately provided pressing and folding or forming machine, two or more metal plates, designated by the reference numeral 2, which have an approximately rectangular plan shape, have the same length, and are made of steel and pre-coated.

The shaping of the metal plates 2 allows to obtain thereon a plurality of longitudinal grooves 3, which are approximately mutually parallel and have a preferably substantially semicircular transverse cross-section.

With reference to Figures 1 to 7, the grooves 3 are provided advantageously on the upper surface, designated by the reference numeral 4a, of the metal plates 2.

At at least one of the longitudinal ends, designated respectively by the reference numerals 5a and 5b, of the metal plates 2 there is also a lip 20, which is obtained for example by way of such pressing and folding or forming machine and lies on a plane which is approximately perpendicular to the plane of arrangement of the metal plates 2.

Advantageously, the two metal plates, also designated by the reference numerals 2a and 2b, which are arranged during use at the longitudinal ends of the respective radiating panel 1 have, at their longitudinal end directed toward the outside of the radiating panel 1, a longitudinal tab 6a, 6b, which is obtained for example by means of said pressing and folding or forming machine.

Advantageously, the longitudinal tabs 6a and 6b are approximately shaped like an inverted L, so as to form a first arm 7a, 7b which is approximately perpendicular to the plane of arrangement of the respective metal plate 2a, 2b, from which a second arm 8a, 8b protrudes approximately at right angles toward the other longitudinal end of the metal plate 2a, 2b, the terminal end 9a, 9b of the second arm being again folded approximately in an L-shape toward the contiguous first arm 7a, 7b.

Accordingly, two longitudinal guides, respectively designated by the reference numerals 10a, 10b, are thus formed between the metal plate 1 and the tabs 6a and 6b.

The method according to the invention then entails placing in each of the grooves 3 a metal pipe 11 which is preferably made of pre-coated, galvanized or electrogalvanized metal plate, of copper or aluminum; advantageously, the pipes 11 are longer than the metal plates 2, so that they protrude with their ends longitudinally from the plates.

With reference to the exemplary embodiment shown in Figures 1 to 7, the diameter of the metal pipes 11 is such as to allow their accommodation within the grooves 3, so that they are arranged, with their lateral surface, approximately flush with the plane of arrangement of the upper surface 4a of the respective metal plate 2.

The method according to the invention then entails the lateral side-by-side arrangement in pairs of said two or more metal plates 2, so that the lips 20 of each pair of said two or more metal plates 2 arranged mutually side-by-side match up; the plates 2 thus arranged side by side are therefore all arranged approximately on a same plane.

The method according to invention further entails positioning, above the pipes 11, at least two pre-coated or electrogalvanized or galvanized cross-members 12.

With reference to the embodiment shown in Figures 1 to 7, the cross-members 12 are positioned above the pipes 11, adjacent to the upper surface 4a of the metal plates 2; in this case, the ends of the cross-members 12 are accommodated preferably respectively in the two longitudinal guides 10a and 10b.

Advantageously, the cross-members 12 are constituted by a metallic profiled element, which is pre-coated or electrogalvanized or galvanized, is preferably made of steel and is approximately L-shaped in transverse cross-section, so as to form a first wing 13, which is approximately flat and arranged, during use, approximately parallel to the plane of arrangement of the upper surface 4a or lower surface of the metal plates 2, from which studs 14 protrude toward said surface and at the grooves 3.

A second wing 15 protrudes from the first wing 13 approximately at right angles and on the opposite side with respect to the studs 14 and is approximately as high as the distance between the terminal ends 9a, 9b of the tabs 6a, 6b and the respective metal plate 2a, 2b.

With reference to the embodiment shown in Figures 1 to 7, the second wing 15 can thus be arranged, during use, so that its ends lie inside the longitudinal guides 10a, 10b; in this case, the transverse ends of the first and second wings of the cross-members 12 are advantageously mutually connected by a connecting element 16a, 16b, which preferably has a rectangular plan shape and is adapted to increase the mechanical strength of the cross-members 12.

Again with reference to the embodiment shown in Figures 1 to 7, seats 21 are formed in the first wing 13 of the cross-members 12, at the underlying lips 20, and said lips are arranged within the seats 21 during use.

Advantageously but not necessarily, three cross-members 12 are provided: two are arranged approximately at the two transverse ends of the panel 1 and one is located approximately at the centerline of said ends.

Finally, the method provides for the fixing of the cross-members 12 to the metal plates 2 by applying thereto a plurality of clinching points 18, advantageously in the regions comprised between the grooves 3, so as to rigidly couple to each other the various metal plates 2 and the pipes 11.

Clinching is a known method for permanently cold-joining metal plates; the clinching point is provided by the interaction of a die and a punch which produce assembly by deformation.

Clinched joints can occur, for example, with or without the provision of additional material, while the geometry of the clinching point can be the most pertinent according to specific requirements.

For example, the clinching points 18 can be of the type having a circular or rectangular plan shape.

Advantageously, once the cross-members 12 are fixed to the metal plates 2, the studs 14 abut against the pipes 11, pressing them or keeping them adjacent to the bottom of the respective groove 3, so as to improve the contact between them and accordingly the coefficient of heat exchange between the pipes 11 and the plates 2.

It has thus been found that the invention has achieved the intended aim and objects, a method for providing radiating panels having been provided which, by way of the use of pre-coated metal plate and clinching, does not require washing or coating of the panel after its assembly, thus reducing significantly production times and costs with respect to the

### background art.

Therefore, the panel does not need to be transferred to a washing and/or coating center and therefore does not have the high costs for transport and for the provision of said treatments which can be observed in the background art.

Further, clinching allows to mutually connect even materials which are difficulty to weld, with the advantage of extending the range of materials which can be used to provide the panels.

Further, by assembling a chosen number of metal plates and using cross-members having an appropriate length, by means of the method according to the invention it is easy to obtain a radiating panel of the chosen width.

The invention is of course susceptible of numerous modifications and variations, all of which are within the scope of the appended claims.

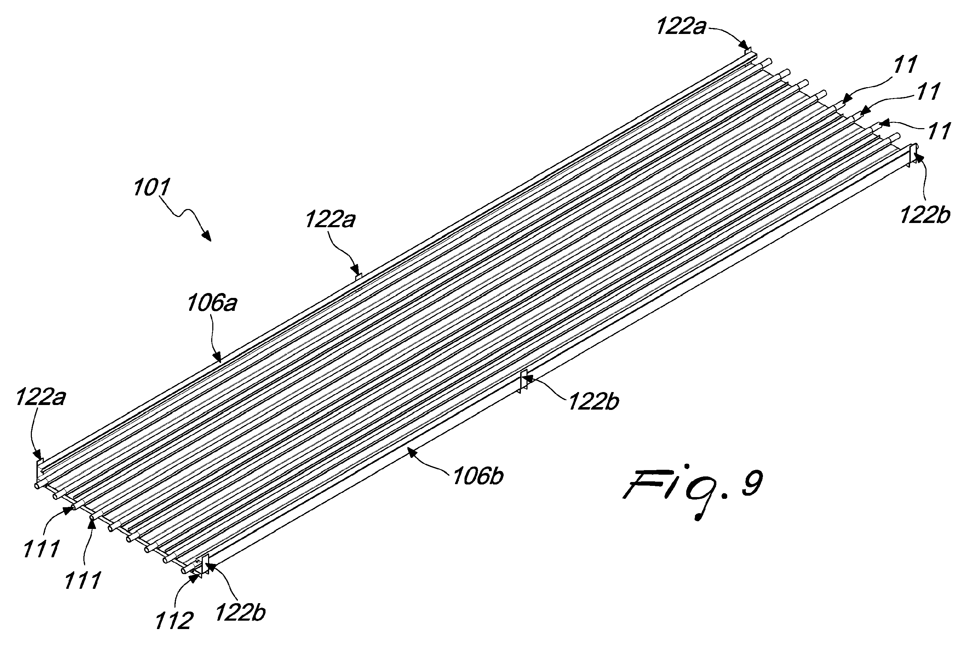

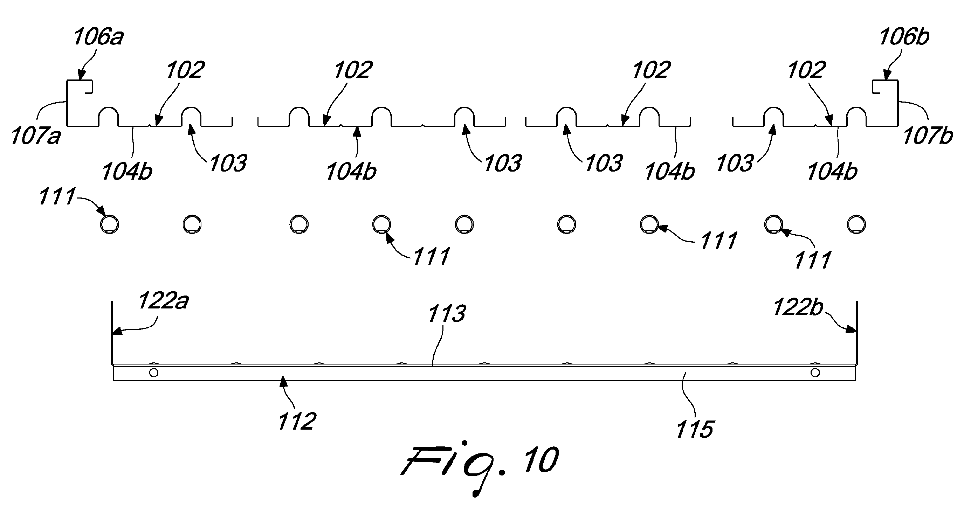

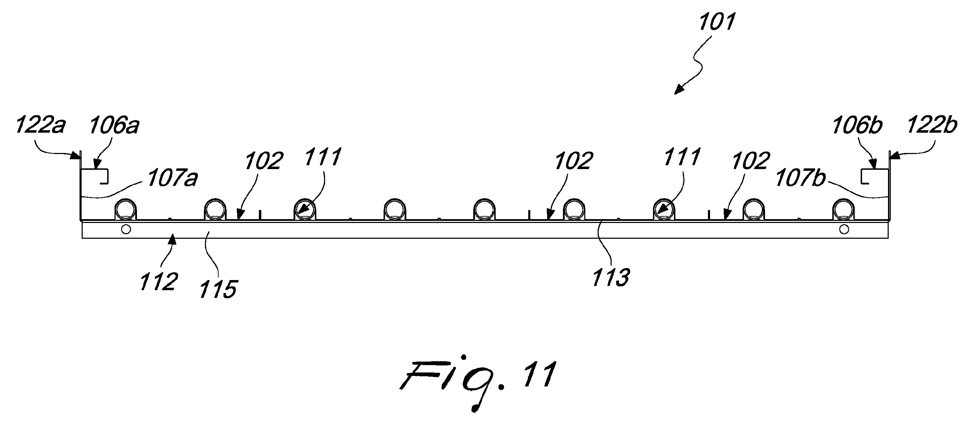

Thus, for example, with reference to Figures 8 to 11, the method according to the invention for obtaining a radiating panel 101 can entail providing the grooves 103 in the lower surface, designated by the reference numeral 104b, of the metal plates 102.

In this case, the metal pipes 111 are accommodated within the grooves 103 and are arranged so that their lateral surface is approximately flush with the plane of arrangement of the lower surface 104b of the respective metal plate 102; the cross-members 112 are then positioned above the pipes 111 and the lower surface 104b of the metal plates 102.

Advantageously, in this case, fins 122a, 122b which have a substantially rectangular plan shape protrude approximately at right angles to the plane of arrangement of the first wing 113 and on the opposite side with respect to the second wing 115 and are arranged, during use, respectively adjacent to the outer surface of the first arms 107a and 107b of the tabs 106a, 106b, so as to wrap laterally around the radiating panel 101.

The materials used and the dimensions that constitute the individual components of the invention may of course be more pertinent according to specific requirements.

The various means for performing certain different functions need not certainly coexist only in the illustrated embodiment but can be present per se in many embodiments, including ones that are not illustrated.

The characteristics indicated as advantageous, convenient or the like may also be omitted or be replaced with equivalents.

The disclosures in Italian Patent Application No. TV2006A00079 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for providing radiating panels, **characterized in that** it comprises the steps of:
a) shaping two or more pre-coated metal plates of the same length, so as to obtain thereon a plurality of longitudinal grooves which are approximately mutually parallel, and obtaining, at at least one longitudinal end thereof, a lip which is approximately perpendicular to their plane of arrangement;
b) placing a metal pipe in each of said grooves, said pipes protruding with their ends longitudinally from said two or more plates;
c) arranging side by side in pairs said two or more metal plates, so as to match up the lips of each pair of said two or more mutually side-by-side plates;
d) positioning, above said pipes, at least two pre-coated or electrogalvanized or galvanized cross-members and fixing said at least two cross-members to said two or more metal plates by clinching.

2. A radiating panel, **characterized in that** it is constituted by two or more pre-coated metal plates which are arranged laterally mutually side-by-side and are provided with a plurality of grooves for accommodating metal pipes which are kept in position by one or more cross-members which are rigidly coupled by clinching to said two or more metal plates, so as to mutually rigidly couple said two or more metal plates.

3. The panel according to claim 2, **characterized in that** the metal plates, of said two or more, that are arranged during use at the longitudinal ends of the respective radiating panel have, at their longitudinal end directed toward the outside of said radiating panel, a longitudinal tab which is approximately shaped like an inverted letter L so as to form a first arm, which is approximately perpendicular to the plane of arrangement of the respective said metal plate and from which a second arm protrudes approximately at right angles toward the other longitudinal end of said metal plate, the terminal end of said second arm being again folded approximately in an L-shape toward said contiguous first arm, two longitudinal guides being formed respectively between said metal plate and said tabs.

4. The panel according to one or more of claims 2-3, **characterized in that** said grooves are provided on the upper surface of said metal plates, the diameter of said pipes being such as to allow to place them within said grooves so that they are arranged with their lateral surface approximately flush with the plane of arrangement of said upper surface of the respective metal plate.

5. The panel according to one or more of claims 2-4, **characterized in that** said cross-members are constituted by a metallic profiled element, which is pre-coated or electrogalvanized or galvanized and has an approximately L-shaped transverse cross-section, so as to form a first wing, which is approximately flat and arranged during use approximately parallel to the plane of arrangement of said upper surface of said metal plate, from which studs protrude toward said surface and at said grooves.

6. The panel according to claim 5, **characterized in that** a second wing protrudes from said first wing approximately at right angles and on the opposite side with respect to said studs and has a height which is approximately equal to the distance between said terminal ends of said tabs and the respective metal plate.

7. The panel according to claims 5 and 6, **characterized in that** said second wing can be arranged, during use, so that its ends are inside said longitudinal guides.

8. The panel according to claims 5 and 7, **characterized in that** the transverse ends of said first and second wings of said cross-members are mutually connected by a connecting element, which has a rectangular plan shape and is adapted to increase the mechanical strength of said cross-members.

9. The panel according to claims 5 and 8, **characterized in that** seats are formed in said first wing of said cross-members at said underlying lips, said lips being arranged within said seats during use.

10. The panel according to one or more of claims 2-9, **characterized in that** said cross-members are three, two being arranged approximately at the two transverse ends of said metal plate, and one being arranged approximately at the centerline of said metal plate.

11. The panel according to one or more of claims 2-9, **characterized in that** said cross-member is made of steel.

12. The panel according to one or more of claims 2-11, **characterized in that** said clinching points are arranged in the regions of said metal plates that are adjacent to said grooves.

13. The panel according to claim 2, **characterized in that** said clinching points are of the type with a circular plan shape.

14. The panel according to claim 2, **characterized in that** said clinching points are of the type having a rectangular plan shape.

15. The panel according to one or more of claims 2-14, **characterized in that** once said cross-members have been fixed to said two or more metal plates, said studs abut against said pipes, pressing or keeping them adjacent to the bottom of the respective groove.

16. The panel according to one or more of claims 2-15, **characterized in that** said grooves are obtained in the lower surface of said metal plates, said pipes being arranged, during use, so that their lateral surface is approximately flush with the plane of arrangement of said lower surface of the respective said metal plate, said cross-members being arranged above said pipes and said lower surface of said two or more metal plates.

17. The panel according to claims 2 and 16, **characterized in that** fins having a substantially rectangular plan shape protrude from the transverse ends of said cross-members approximately at right angles to the plane of arrangement of said first wing and on the opposite side with respect to said second wing, and are arranged during use respectively adjacent to the outer surface of said first arms of said tabs, so as to wrap laterally around said radiating panel.

18. The panel according to one or more of claims 2-17, **characterized in that** said metal pipes are made of pre-coated, galvanized or electrogalvanized metal plate, made of copper or aluminum.
